# EUROPEAN PATENT APPLICATION

(11) **EP 3 309 089 A2**
(43) Date of publication of application: **18.04.2018**
(21) Application number: 17194853.2
(22) Date of filing: 05.10.2017
(51) Int. Cl.: B65D 51/28

(54) **BOTTLE FOR COLD-BREWED TEA**

(30) Priority: 12.10.2016 CN 201621114659 U; 09.11.2016 CN 201621207910 U
(71) Applicant: Guizhou Green Tea Technology Development Co. Ltd., 550001 Guiyang Guizhou Province (CN)
(72) Inventor: LI, Shuqi, GUIYANG, GUIZHOU PROVINCE 550001 (CN)
(74) Representative: Zaboliene, Reda

(57) **Abstract**

The invention relates to a cold-brewed tea beverage bottle. The cold-brewed tea beverage bottle includes a bottle cap and a bottle body; a tea container is arranged on an upper portion of the bottle body or the bottle cap; a retaining cap is mounted in the tea container in a clearance fit; a bottom end of the retaining cap is of a zigzag shape, which is just opposite to a seal sheet on a bottom portion of the tea container; a water out is formed on an upper portion of the retaining cap; a pushing rod is arranged on the tea container and in the bottle cap; the pushing rod and a force-exerting sealing cap both are in threaded connection with the bottle cap; the pushing rod and the force-exerting sealing cap are respectively provided with a convex strip and a groove that are matched with each other; the force-exerting sealing cap is further in reverse threaded connection with the bottle cap; by rotating the force-exerting sealing cap and pressing down the pushing rod, the pushing rod presses down the retaining cap, the retaining cap props against the seal sheet to open, and the tea leaves in the tea container are fallen into the bottle to soak. According to the cold-brewed tea beverage bottle, the tea and the water are separated when it is produced; when it is used, the tea leaves are soaked in the water under an external force to form a ready-to-drink cool and refreshing beverage; the shelf life is prolonged compared with that of a common beverage; and the use is simple and convenient.

## Description

### RELATED APPLICATIONS

The present application claims the benefit of the Chinese utility model applications CN201621114659.0 filed October 12, 2016 and CN201621207910.8 filed November 9, 2016, each of which is incorporated herein by reference in its entirety.

### FIELD OF THE INVENTION

The present invention relates to a container, and more particularly, to a ready-to-drink disposable cold-brewed tea beverage.

### BACKGROUND OF THE INVENTION

The cold-brewed tea refers to a cool and refreshing tea water beverage which is prepared by soaking the tea leaves with cold water directly such that beneficial components in the tea leaves are slowly dissolved and released and which does not need to be refrigerated after being poured out with long-time soaking. The release of the theophyline in the tea leaves can be reduced, and the bitter taste of the tea water can be decreased. At present, most of the cold-brewed teas are ready-to-drink, and cannot to be stored for a long time, not to mention implementing market-oriented development and sales like other beverages. In addition, the existing cold-brewed tea under a natural state is soaked with cold water at room temperature or low temperature. As a result, the soaking time is long, which is not suitable for industrial production. If an existing mineral water bottle is used for the cold-brewed tea, it is inevitable for tea leaves to enter the water, thereby being not convenient for drinking.

Currently, the ready-to-drink problem of the disposable cold-brewed tea is solved, but there is a need to prop against a retaining cap into a tea container with a hand, thus propping against a bottom portion of the tea container to open. The inventor further makes improvements to a structure and discloses a more effective and convenient device, which is suitable for the disposable and ready-to-drink purposes.

### OBJECTS AND SUMMARY OF THE INVENTION

In light of the above technical problems, the present invention is intended to provide a simple disposable cold-brewed tea packaging bottle. By virtue of the device, the tea and the water are separated, the tea is ready-to-drink, the purpose of long shelf life is achieved, and the mouth feel of the brewed tea is good.

The purposes and the solutions to solve the major technical problems are implemented by the following technical scheme:

A cold-brewed tea beverage bottle includes a bottle cap and a bottle body, wherein a tea container is arranged on an upper portion of the bottle body; a retaining cap is tightly embedded into the tea container; a bottom portion of the retaining cap is of a zigzag shape, which is just opposite to a bottom portion of the tea container; a water outlet is formed on an upper portion of the retaining cap and is covered by a piece of film paper.

The retaining cap and the tea container are in a clearance fit, and can form a relative slip.

The tea container is connected with the bottle body by means of a lug boss. An annular lug boss consistent to the width of a bottleneck is formed on a top portion of the tea container, so as to limit a position conveniently in assembly. The tea container and the bottle neck are tightly matched to be installed.

A convex strip and a groove that are corresponding to each other are respectively arranged in the tea container and out of the retaining cap. The convex strip is slid in the groove, thereby taking positioning and guiding effects.

A block on the bottom portion of the tea container is fixedly connected with a container body.

When it is used, the bottom cap is opened; the film paper on the retaining cap is torn down; and the retaining cap is propped against into the tea container with a hand to open the bottom portion of the tea container, such that mineral water or pure water is fully mixed and soaked with the tea leaves, and then the tea water may be drunk by means of a water outlet of the retaining cap.

Compared with the prior art, the present invention has remarkable advantages and beneficial effects. It can be seen from the above technical scheme that when the disposable beverage device of the present invention is produced, the tea and the water are separated. When it is used, the water and the tea leaves can be mixed via a simple action to form the read-to-drink cool and refreshing beverage; moreover, the tea leaves still are separated from the water; therefore, the purpose that the shelf life is prolonged compared with a common beverage is achieved, and the present invention is simpler and more convenient than the original device.

A cold-brewed tea beverage bottle includes a bottle cap and a bottle body that are matched to be installed; a tea container configured to place tea leaves is arranged at an upper opening place of the bottle body; a seal sheet configured to seal a bottom portion of the tea container and propped to open after being pressed down is mounted on the bottom portion of the tea container.

The tea container is fixedly mounted on a bottleneck; a retaining cap is arranged in the tea container in a clearance fit; the tea leaves are placed between an upper portion of the retaining cap and the seal sheet; a water channel for the water flowing out of the bottle body is arranged on the retaining cap;

A threaded through hole is formed on a top portion of the bottle cap; a force-exerting sealing cap is mounted on the top portion of the bottle cap by screw thread matching; a pushing rod is mounted on an inner wall of the bottle cap by screw thread matching; by rotating the force-exerting sealing cap, the force-exerting sealing cap drives the pushing rod to rotate and then press down the retaining cap, such that the retaining cap props against the seal sheet on the bottom portion of the tea container to open.

The tea container is fixedly mounted on a bottom surface of the bottle cap; a threaded through hole is formed on a top portion of the bottle cap; a force-exerting sealing cap is mounted on the top portion of the bottle cap by screw thread matching; a pushing rod positioned in the tea container is mounted on an inner wall of the bottle cap by screw thread matching; by rotating the force-exerting sealing cap, the force-exerting sealing cap drives the pushing rod to rotate and then press down the retaining cap, such that the retaining cap props against the seal sheet on the bottom portion of the tea container to open.

The tea container is fixedly installed on a bottom surface of the bottle cap; a threaded through hole is formed on a top portion of the bottle cap; a force-exerting sealing cap is installed on the top portion of the bottle cap by screw thread matching; the force-exerting sealing cap is connected with an ejector rod configured to eject the seal sheet on the bottom portion of the tea container to open.

A convex strip is arranged on an upper portion of the ejector rod; a groove for holding the convex strip is arranged on a lower portion of the force-exerting sealing cap; the groove is matched with the convex strip such that the pushing rod and the force-exerting sealing cap are cooperatively moved up or down.

A covering sheet is integrally arranged on an upper portion of the retaining cap; water flowing ports are formed on the covering sheet; a holding chamber for holding the tea leaves is formed between the seal sheet installed on the bottom portion of the tea container and the covering sheet on the upper portion of the retaining cap.

A chute is formed on the inner wall of the tea container; a slide rail matched with the chute is arranged on an outer wall of the retaining cap; the slide rail is slid along the chute so as to take a very good guiding effect.

An annular lug boss configured to limit a position in assembly is arranged on the top portion of the tea container; the width of the annular lug boss is consistent with the thickness of the top portion of the tea container, such that the consistency of a structure on the bottleneck portion is good and thus the bottle cap is mounted conveniently and the drinking is also convenient.

The covering sheet on the upper portion of the retaining cap is provided with a stopper configured to prevent the water in the bottle body from flowing out by means of the water flowing ports; the stopper is matched with the bottle cap, thereby taking a dual sealing effect.

The stopper is made of a food-grade rubber, so the use is safe.

When the bottle is used, the force-exerting sealing cap is screwed with the hand, and the pushing rod is moved downward by means of the convex strips, the grooves and the screw threads to prop against the seal sheet on the bottom portion of the tea container to open; and thus, the tea leaves stored in the tea container (holding chamber) are fallen into the bottom and are mixed and soaked with the water. After the tea leaves are soaked for a period of time, the bottle cap is opened and the stopper is pulled out; and at this moment, the tea water may be drunk by means of the water outlet of the retaining cap.

When the disposable beverage is produced, the tea and the water are separated, the tea is ready-to-drink to form the ready-to-drink cool and refreshing beverage, and the mouth feel of the brewed tea is good. The tea leaves are separated from the water to be stored, so the purpose that the shelf life is prolonged compared with that of the common beverage is achieved, and the ready-to-drink tea is brewed simply and conveniently.

### BRIEF DESCRIPTION OF FIGURES

FIG. 1 is a structure diagram of a first embodiment;
FIG. 2 is a top view of a retaining cap;
FIG. 3 is a systematic diagram of a retaining cap;
FIG. 4 is a right view of FIG. 3;
FIG. 5 is a top view of a tea container;
FIG. 6 is a systematic view of a tea container;
FIG. 7 is a right view of FIG. 6;
FIG. 8 is a top view after a bottle cap is opened;
FIG. 9 is a systematic view after a bottle cap is opened;
FIG. 10 is a right view of FIG. 9;
FIG. 11 is a structure diagram of the present invention;
FIG. 12 is a systematic diagram illustrating a connection between a pushing rod and a bottle cap on an improved portion of the present invention;
FIG. 13 is a systematic diagram of a force-exerting sealing cap of the present invention;
FIG. 14 is a 1-1 sectional view of FIG. 11;
FIG. 15 is a 2-2 sectional view of FIG. 11;
FIG. 16 is a systematic diagram of a pushing rod;
FIG. 17 is a right view of FIG. 16;
FIG. 18 is a top view of FIG. 16;
FIG. 19 is a systematic diagram of a bottle cap of the present invention;
FIG. 20 is a 1-1 sectional view of FIG. 19;
FIG. 21 is a systematic view of a retaining cap;

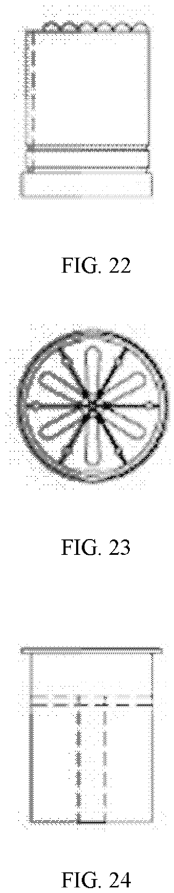

FIG. 22 is a right view of FIG. 21;
FIG. 23 is a top view of FIG. 21;
FIG. 24 is a systematic diagram of a tea container of the present invention;

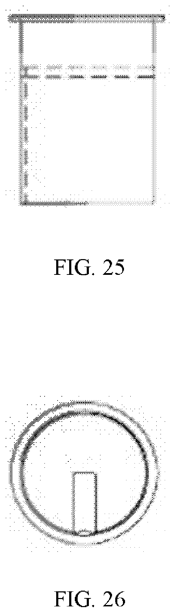

FIG. 25 is a right view of FIG. 24;
FIG. 26 is a top view of FIG. 24;

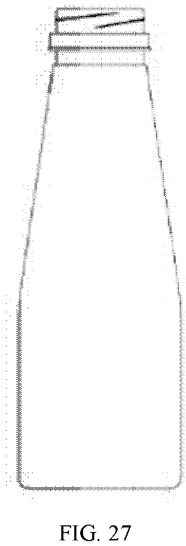

FIG. 27 is a systematic diagram of a bottle body of the present invention;

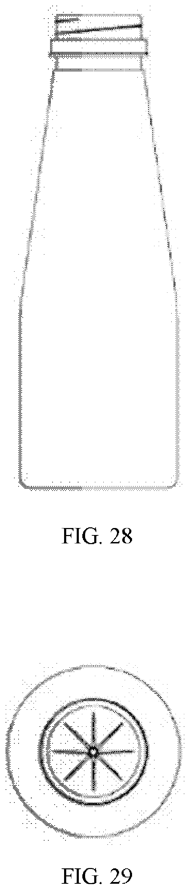

FIG. 28 is a right view of FIG. 27; and
FIG. 29 is a top view of FIG. 27.

Labels in drawings: A, a force-exerting sealing cap; b, a pushing rod; C, a bottle cap; 1, a retaining cap; 2, a tea container; 3, a bottle body.

### DETAILED DESCRIPTION OF THE EMBODIMENTS

The present invention will be described below with reference to principles and characteristics of the present invention. The examples herein are merely for explaining the present invention and are not intended to limit the scope of the present invention.

### Example 1 :

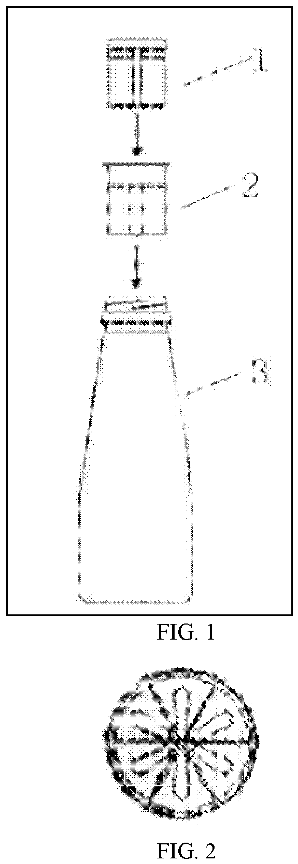

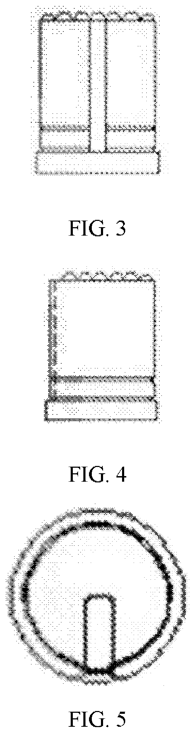

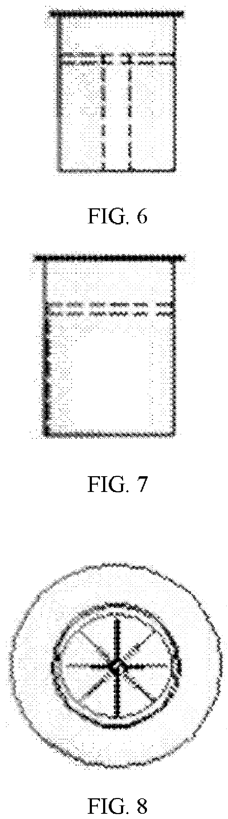

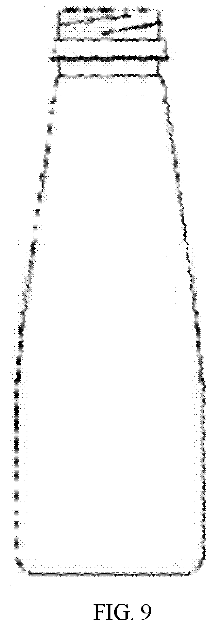

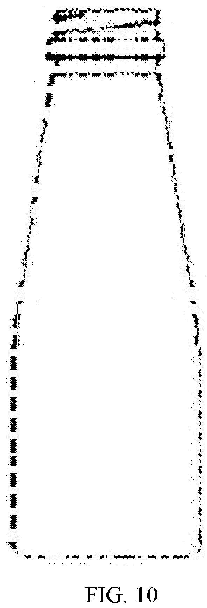

Referring to FIG. 1-10, a cold-brewed tea beverage bottle includes a bottle cap and a bottle body 3; a tea container 2 is arranged on an upper portion of the bottle body 3; a retaining cap 1 is tightly embedded into the tea container 2; a bottom end of the retaining cap 1 is of a zigzag shape, which is just opposite to a bottom portion of the tea container 2; a water outlet is formed on an upper portion of the retaining cap 1 and is covered by a piece of film paper.

The tea container 2 is connected with the bottle body 3 by means of a lug boss 2.

A convex strip and a groove that are corresponding are respectively in the tea container 2 and out of the retaining cap 1, thereby taking a limiting effect.

A block on the bottom portion of the tea container 2 is fixedly connected with a container body. The retaining cap is not disconnected.

When it is used, the force-exerting sealing cap is screwed with the hand, the pushing rod is moved downward by means of the convex strips, the grooves and the screw threads, and the retaining cap is propped against into the tea container such that most of the bottom portion of the tea container are opened; and thus, mineral water or pure water is fully mixed and soaked with the tea leaves, and then the tea water may be drunk by means of the water outlet of the retaining cap.

### Example 2 :

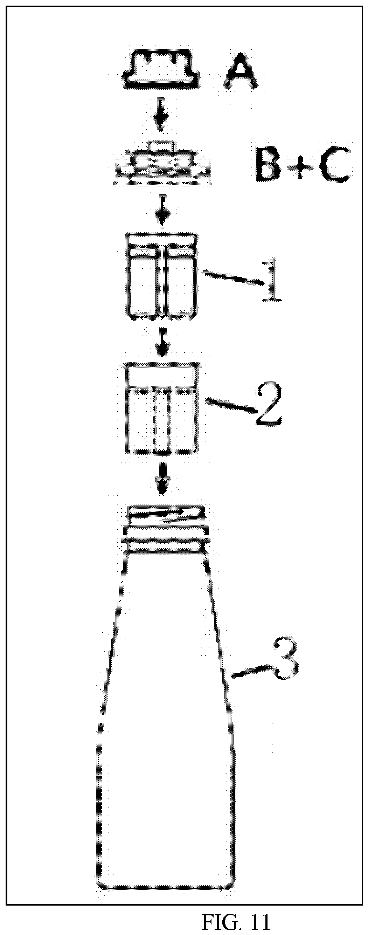

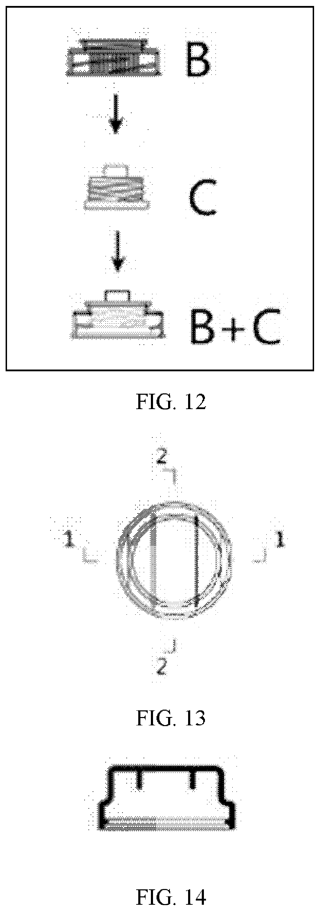

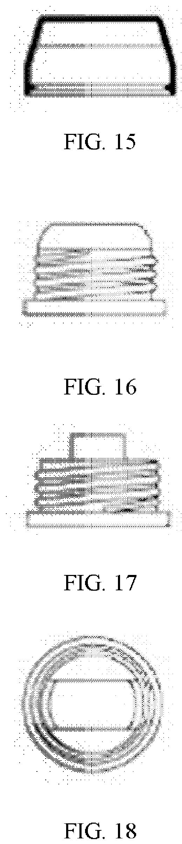

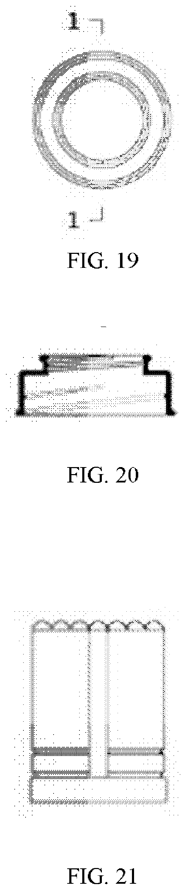

Referring to FIG. 11-19, a cold-brewed tea beverage bottle includes a bottle cap C and a bottle body 3; a tea container 2 is arranged on an upper portion of the bottle body 3; a retaining cap 1 is tightly embedded into the tea container 3; a bottom end of the retaining cap 1 is of a zigzag shape, which is just opposite to a bottom portion of the tea container 2; a water outlet is formed on an upper portion of the retaining cap; the cold-brewed beverage bottle is characterized in that: a pushing rod B is arranged on the tea container 2 and in the bottle cap C; the pushing rod B is in threaded connection with a force-exerting sealing cap A; the pushing rod B and the force-exerting sealing cap A are respectively provided with a convex strip and a groove that are matched with each other; the force-exerting sealing cap A is further in reverse threaded connection with the bottle cap C, thereby taking force-exerting and sealing effects.

The tea container 2 is connected with the bottle body 3 by means of a lug boss 2.

A convex strip and a groove that are corresponding to each other are respectively in the tea container 2 and out of the retaining cap 1, thereby taking a limiting effect.

A block on the bottom portion of the tea container 2 is fixedly connected with a container body. The retaining cap is not disconnected.

When it is used, the force-exerting sealing cap A is screwed with the hand, the pushing rod B is moved downward by means of the convex strips, the grooves and the screw threads, and the retaining cap 1 is propped against into the tea container 2 such that most of the bottom portion of the tea container 2 are opened; and thus, mineral water or pure water is fully mixed and soaked with the tea leaves; thereafter, the bottle cap C is opened, and the tea water may be drunk by means of the water outlet of the retaining cap 1.

The present invention makes the tea and the water separated and is convenient, quick, easy to store and convenient to circulate. By employing the device, an additive and a solution can be immediately mixed to form a novel beverage. Herein, the additive includes but not limited to all teas, and further includes all soluble or insoluble foods, medicines, healthcare products and any beverage formed by mixing a substance that can be swallowed in the mouth with a liquid. The structure is simple, and the use is convenient.

### Example 3 :

A cold-brewed tea beverage bottle includes a bottle cap C and a bottle body 3 that are matched to be installed; a tea container 2 configured to place tea leaves is arranged at an upper opening place of the bottle body 3; an annular lug boss configured to limit a position is arranged on a top portion of the tea container 2; a seal sheet configured to seal a bottom portion of the tea container 2 and propped against to open after a retaining cap 1 is pressed down is mounted on the bottom portion of the tea container 2; the seal sheet may be of a separable structure, and also may not be fallen into the bottle by partially connecting with the bottom portion of the tea container 2; a covering sheet is integrally arranged on an upper portion of the retaining cap 1; water flowing ports are formed on the covering sheet; and a holding chamber for holding the tea leaves is formed between the seal sheet mounted on the bottom portion of the tea container 2 and the covering sheet on the upper portion of the retaining cap 1. A water channel is formed on the retaining cap 1.

A threaded through hole is formed on a top portion of the bottle cap C; a force-exerting sealing cap A is mounted on the top portion of the bottle cap C by screw thread matching; a pushing rod is mounted on an inner wall of the bottle cap C by screw thread matching; a convex strip is arranged on an upper portion of the pushing rod B; a groove for holding the convex strip is formed on a lower portion of the force-exerting sealing cap A; by rotating the force-exerting sealing cap A, the force-exerting sealing cap A drives the pushing rod B to rotate and then press down the retaining cap 1. A chute is formed on the inner wall of the tea container 2; a slide rail matched with the chute is arranged on an outer wall of the retaining cap 1. The retaining cap is moved downward under the action of a pressure, thereby propping against the seal sheet on the bottom portion of the tea container 2 to open. The dry tea leaves in the tea container 2 are fallen into the bottom and are soaked in the bottle. By reversely rotating the force-exerting sealing cap A, the force-exerting sealing cap A is ascended to take the good sealing effect such that the water can be prevented from flowing out.

The retaining cap 1 and the tea container are in a sliding seal so as to guarantee the sealing property.

The water flowing ports on the covering sheet are of an elongated strip shape and are uniformly distributed along an annular shape; and hence, the water flow is smooth when the water is drunk.

### Example 4 :

A cold-brewed tea beverage bottle includes a bottle cap C and a bottle body 3 that are matched to be installed; a tea container 2 configured to place tea leaves is arranged at an upper opening place of the bottle body 3; the tea leaves are encapsulated in the tea container 2; a seal sheet that may be propped against to open under the action of an external force is mounted on a bottom portion of the tea container 2; the seal sheet may be of a separable structure and is propped against to open under the action of the external force to fall into the bottle, and also may be not fallen into the bottle by partially connecting with the bottom portion of the tea container 2. A covering sheet is arranged on an upper portion of the tea container; a through hole is formed on the covering sheet.

A threaded through hole is formed on a top portion of the bottle cap C; a force-exerting sealing cap A is mounted on the top portion of the bottle cap C by screw thread matching; a pushing rod is mounted on an inner wall of the bottle cap C by screw thread matching; by rotating the force-exerting sealing cap A, the force-exerting sealing cap A drives the pushing rod to rotate and then press down, such that a lower portion of the pushing rod passes through the covering sheet and props against the seal sheet to open. By reversely rotating the force-exerting sealing cap A, the force-exerting sealing cap A is ascended to take the good sealing effect such that the water can be prevented from flowing out.

### Example 5 :

A cold-brewed tea beverage bottle includes a bottle cap C and a bottle body 3 that are matched to be installed; a tea container 2 is integrally arranged on a bottom surface of the bottle cap C; an inner sidewall of the bottle cap C and screw threads at a bottleneck are installed by screw thread matching. After the bottleneck is installed, the tea container 2 is positioned in the bottleneck. A threaded through hole is formed on a top portion of the bottle cap; a force-exerting sealing cap A is mounted on the top portion of the bottle cap by screw thread matching; a pushing rod B positioned in the tea container is mounted on an inner wall of the bottle cap by screw thread matching; by rotating the force-exerting sealing cap A, the force-exerting sealing cap A drives the pushing rod B to rotate and then press down a retaining cap 1, such that the retaining cap props against the seal sheet on the bottom portion of the tea container to open.

### Example 6 :

A cold-brewed tea beverage bottle includes a bottle cap C and a bottle body 3 that are matched to be installed; a tea container 2 is arranged on a bottom surface of the bottle cap C; an inner sidewall of the bottle cap C and screw threads at a bottleneck are installed by screw thread matching. After the bottleneck is installed, the tea container 2 is positioned in the bottleneck. A threaded through hole is formed on a top portion of the bottle cap C; a force-exerting sealing cap A is installed on the top portion of the bottle cap C by screw thread matching; the force-exerting sealing cap A is connected with an ejector rod configured to eject the seal sheet on the bottom portion of the tea container to open.

### Example 7 :

A cold-brewed tea beverage bottle includes a bottle cap C and a bottle body 3 that are matched to be installed; a tea container 2 is arranged at a bottleneck place of the bottle body 3 by tight matching; a seal sheet is mounted on a bottom portion of the tea container; a water outlet is formed on a top portion of the tea container. An ejector rod is arranged on an upper portion of the bottle cap C by screw thread matching; by rotating the ejector rod, the ejector rod is moved downward to eject the seal sheet to open, such that tea leaves in the tea container 2 is fallen into the bottle. The soaked tea water is flowed out by means of an opening on a lower portion of the tea container 2 and the water outlet on an upper portion.

### Example 8 :

A cold-brewed tea beverage bottle includes a bottle cap C and a bottle body 3 that are matched to be installed; a tea container 2 is arranged at a bottleneck place of the bottle body 3 by tight matching; a seal sheet is mounted on a bottom portion of the tea container; a water outlet is formed on a top portion of the tea container. An ejector rod is arranged on an upper portion of the bottle cap C in a clearance fit; an annular limiting bump configured to limit a position is arranged at a lower portion of the ejector rod; the limiting bump is made of a rubber material; a compression spring is arranged between a top portion of the ejector rod and a top surface of the bottle cap 3. By pressing down the ejector rod, the ejector rod passes through an upper portion of the tea container 2 and then ejects the seal sheet arranged on the bottom portion of the tea container to open, such that the tea leaves in the tea container 2 is fallen into the bottle. The soaked tea water is flowed out by means of an opening on a lower portion of the tea container 2 and the water outlet on an upper portion.

### Example 9 :

A cold-brewed tea beverage bottle includes a bottle cap C and a bottle body 3 that are matched to be installed; a tea container 2 is arranged at a lower portion of the bottle cap C; a seal sheet that can be propped against to open under a pressure is mounted on a bottom portion of the tea container; an upper portion of the tea container and the bottle cap are of an integral structure; an ejector rod is installed on a top portion of the bottle cap by screw thread matching; by rotating the ejector rod, the ejector rod is moved downward to eject the seal sheet to open, such that the tea leaves in the tea container 2 are fallen into the bottle. After soaking, the bottle cap is opened and the tea water is drunk by means of a bottleneck.

### Example 10 :

A cold-brewed tea beverage bottle includes a bottle cap C and a bottle body 3 that are matched to be installed; a tea container 2 configured to place tea leaves is mounted at an upper opening place of the bottle body 3; an annular lug boss configured to limit a position in assembly is arranged on a top portion of the tea container 2; a seal sheet configured to seal a bottom portion of the tea container 2 and propped against to open under an external force is mounted on the bottom portion of the tea container 2; a retaining cap 1 is mounted in the tea container 2 in a clearance fit; a covering sheet is integrally arranged on an upper portion of the retaining cap 1; water flowing ports are formed on the covering sheet; and a holding chamber for holding the tea leaves is formed between the seal sheet mounted on the bottom portion of the tea container 2 and the covering sheet on the upper portion of the retaining cap 1.

A top portion of the bottle cap C is made of an elastic material; an ejector rod is mounted at an internal bottom surface of the bottle cap; by pressing down the bottle cap, the ejector rod is moved downward to press down the retaining cap 1, and the retaining cap 1 is moved downward to eject the seal sheet to open, such that the tea leaves in the tea container 2 are fallen into the bottle to soak.

In conclusion, according to the cold-brewed tea beverage bottle, when it is produced, the tea and the water are separated, and the tea leaves are separately stored in the bottle cap or the tea container 2 at the bottleneck. When it is used, the seal sheet on bottom portion of the tea container 2 is propped against to open by virtue of the external force. The tea leaves can be soaked in the water via the simple action, thereby forming the ready-to-drink cool and refreshing beverage. The tea leaves are separated from the water to be stored, so the purpose that the shelf life is prolonged compared with that of the common beverage is achieved, the ready-to-drink tea is brewed simply and conveniently, and the mouth feel of the brewed tea is good. Therefore, the bottle is skillful and simple in structure and convenient to use.

The foregoing is only preferred exemplary embodiments of the present invention and is not intended to be limiting of the present invention, and any modifications, equivalent substitutions, improvements and the like within the spirit and principles of the present invention are intended to be embraced by the protection range of the present invention.

## Claims

1. A bottle for cold-brewed tea, comprising a bottle cap and a bottle body, wherein:
a tea container is arranged on an upper portion of the bottle body;
a retaining cap is tightly embedded into the tea container;
a bottom portion of the retaining cap is of a zigzag shape, which is just opposite to a bottom portion of the tea container; and
a water outlet is formed on an upper portion of the retaining cap and is covered by a piece of film paper.

2. The bottle in claim 1, wherein the retaining cap and the tea container are in a clearance fit.

3. The bottle in claim 1, wherein the tea container is connected with the bottle body by means of a lug boss.

4. The bottle in claim 1, wherein a convex strip and a groove that are corresponding to each other are respectively arranged in the tea container and out of the retaining cap.

5. The bottle in claim 1, wherein a block on the bottom portion of the tea container is fixedly connected with a container body.

6. A bottle for cold-brewed tea, comprising a bottle cap and a bottle body, wherein:
a tea container is arranged on an upper portion of the bottle body;
a retaining cap is tightly embedded into the tea container; a bottom end of the retaining cap is of a zigzag shape, which is just opposite to a bottom portion of the tea container;
a water outlet is formed on an upper portion of the retaining cap;
a pushing rod is arranged on the tea container and in the bottle cap; the pushing rod is in threaded connection with a force-exerting sealing cap;
the pushing rod and the force-exerting sealing cap are respectively provided with a convex strip and a groove that are matched with each other; and
the force-exerting sealing cap is further in reverse threaded connection with the bottle cap.

7. The bottle in claim 5, wherein the tea container is connected with the bottle body by means of a lug boss.

8. The bottle in claim 5, wherein a convex strip and a groove that are corresponding to each other are respectively arranged in the tea container and out of the retaining cap.

9. The bottle in claim 5, wherein a block on the bottom portion of the tea container is fixedly connected with a container body.

10. A bottle for cold-brewed tea, comprising:
a bottle cap and a bottle body that are matched to be installed;
a tea container configured to place tea leaves being arranged at an upper opening place of the bottle body; and
a seal sheet configured to seal a bottom portion of the tea container and propped to open after being pressed down being mounted on the bottom portion of the tea container.

11. The bottle in claim 10, wherein:
the tea container is fixedly mounted on a bottleneck;
a retaining cap is arranged in the tea container in a clearance fit;
the tea leaves are placed between an upper portion of the retaining cap and the seal sheet;
a water channel for the water flowing out of the bottle body is arranged on the retaining cap;
a threaded through hole is formed on a top portion of the bottle cap;
a force-exerting sealing cap is mounted on the top portion of the bottle cap by screw thread matching; and
a pushing rod is mounted on an inner wall of the bottle cap by screw thread matching; by rotating the force-exerting sealing cap, the force-exerting sealing cap drives the pushing rod to rotate and then press down the retaining cap, such that the retaining cap props against the seal sheet on the bottom portion of the tea container to open.

12. The bottle in claim 10, wherein:
the tea container is fixedly mounted on a bottom surface of the bottle cap;
a threaded through hole is formed on a top portion of the bottle cap;
a force-exerting sealing cap is mounted on the top portion of the bottle cap by screw thread matching;
a pushing rod positioned in the tea container is mounted on an inner wall of the bottle cap by screw thread matching; and
by rotating the force-exerting sealing cap, the force-exerting sealing cap drives the pushing rod to rotate and then press down the retaining cap, such that the retaining cap props against the seal sheet on the bottom portion of the tea container to open.

13. The bottle in claim 10, wherein:
the tea container is fixedly mounted on a bottom surface of the bottle cap;
a threaded through hole is formed on a top portion of the bottle cap;
a force-exerting sealing cap is mounted on the top portion of the bottle cap by screw thread matching; and
the force-exerting sealing cap is connected with an ejector rod configured to eject the seal sheet on the bottom portion of the tea container to open.

14. The bottle according to claims 11 or 12, wherein:
a convex strip is arranged on an upper portion of the ejector rod; and
a groove for holding the convex strip is arranged on a lower portion of the force-exerting sealing cap.

15. The bottle in claim 11, wherein:
a covering sheet is integrally arranged on an upper portion of the retaining cap;
water flowing ports are formed on the covering sheet; and
a holding chamber for holding the tea leaves is formed between the seal sheet mounted on the bottom portion of the tea container and the covering sheet on the upper portion of the retaining cap.

16. The bottle according to claims 11 or 12, wherein:
a chute is formed on the inner wall of the tea container; and
a slide rail matched with the chute is arranged on an outer wall of the retaining cap.

17. The bottle in claim 11, wherein:
an annular lug boss configured to limit a position in assembly is arranged on the top portion of the tea container; and
the width of the annular lug boss is consistent with the thickness of the top portion of the tea container.

18. The bottle in claim 17, wherein the covering sheet on the upper portion of the retaining cap is provided with a stopper configured to prevent the water in the bottle body from flowing out by means of the water flowing ports.

19. The bottle in claim 18, wherein the stopper is made of a food-grade rubber.
